(19)

Europäisches Patentamt

European Patent Office

Office européen des brevets

(11) **EP 1 282 034 A2**

(12) **EUROPEAN PATENT APPLICATION**

(43) Date of publication:
**05.02.2003 Bulletin 2003/06**

(51) Int Cl.⁷: **G06F 7/50**

(21) Application number: **02015111.4**

(22) Date of filing: **05.07.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **02.08.2001 US 922371**

(71) Applicant: **FUJITSU LIMITED**
**Kawasaki-shi, Kanagawa 211-8588 (JP)**

(72) Inventors:
• **Naini, Ajay**
  **San Jose, California 95129 (US)**

• **Dhablania, Atul**
  **San Jose, California 95128 (US)**
• **James, Warren**
  **San Jose, California 95128 (US)**

(74) Representative: **Sunderland, James Harry et al**
**Haseltine Lake & Co.,**
**Imperial House,**
**15-19 Kingsway**
**London WC2B 6UD (GB)**

(54) **Elimination of rounding step in the short path of a floating point adder**

(57)    The apparatus and method of the present invention operates to perform a floating-point operation involving at least two operands in floating-point representation. The apparatus comprises two concurrent data paths, a short path and a long path. The short path is used to produce a result of the floating-point operation if the floating-point operation is a subtract operation and the exponent difference of the two operands is 0, or if the floating-point operation is a subtract operation, the exponent difference is 1, and the mantissa of the operand with a larger exponent is within a predetermined number range. The long path is used to produce a result of the floating-point operation if the floating point operation is an addition operation, or if it is a subtraction operation and the exponent difference is larger than one, or if it is a subtract operation, the exponent difference is 1, and the mantissa of the operand with the larger exponent is within another predetermined number range. Using this logic for selecting a data path for the floating-point operation, the short path does not require means such as an incrementer for post subtraction normalization.

Fig. 5

EP 1 282 034 A2

## Description

### Field of the Invention

The present invention relates to the technology for designing floating-point adder units in computer processors.

### Background of the Invention

Computer processors commonly include a floating-point adder to add or subtract two numbers (operands) in floating-point representation. In the floating-point representation, a number is represented in the form $\pm\, m \times R^e$, where $m$ is called the mantissa, $R$ is the radix (or base), and $e$ is the exponent. Typically, in the floating-point adder, the radix is implied, and a fixed number of bits are reserved for each floating-point number. Among the fixed number of bits, one bit is reserved for the sign of the number, a preselected number of bits are reserved for the exponent, and a preselected number of bits are reserved for the mantissa. The number of bits for the mantissa determines the precision of the floating-point number and the number of bits for the exponent determines a range of numbers that can be represented. Therefore, a fixed-bit format is a trade-off between precision and range.

A nonzero floating-point number may be normalized by adjusting the mantissa and the exponent values so that there is exactly one nonzero digit to the left of the decimal point in the mantissa. Therefore, a leading bit of 1 is implied and can he hidden so as to provide one extra bit of data or twice the representable mantissas. Additionally, the base is typically implied also and does not need to be represented in hardware. For example, according to the 32-bit single precision format in the IEEE-754 Standard, which is incorporated by reference herein, a normalized floating point number $N = \pm\, m \times R^e$ may be stored as:

| $1$ | $8$ | $23$ |
|---|---|---|
| $S$ | biased exponent $E$ | unsigned fraction $F$ |

where S is the value for the sign bit (S is 0 for positive numbers and S is 1 for negative numbers), E is an 8-bit value representing the exponent $e$ in excess of-127 ($e$ being in the range of-126 to +127), or E = $e$ + 127, and F is a 23-bit value representing the fractional part of $m$. Therefore,

$$N = (-1)^S * 1.F * 2^{E-127}.$$

A floating point addition operation typically includes the following steps: (1) exponent subtraction step to determine the amount of shifting required in order to align the mantissas of the two operands; (2) alignment step for aligning decimal points of the two operands by right shifting the mantissa of a smaller operand; (3) mantissa addition or subtraction step for the actual arithmetic operation; (4) conversion step for determining the sign of the resulting number; (5) leading one detection step to determine the amount of left or right shifting needed to normalize the resulting number; (6) post normalization step to normalize the resulting number; and sometimes, (7) rounding step when the number of digits in the resulting number exceed the total number of digits allowed by a certain format. With these many steps being performed serially, the floating-point adder unit can be slow in performance.

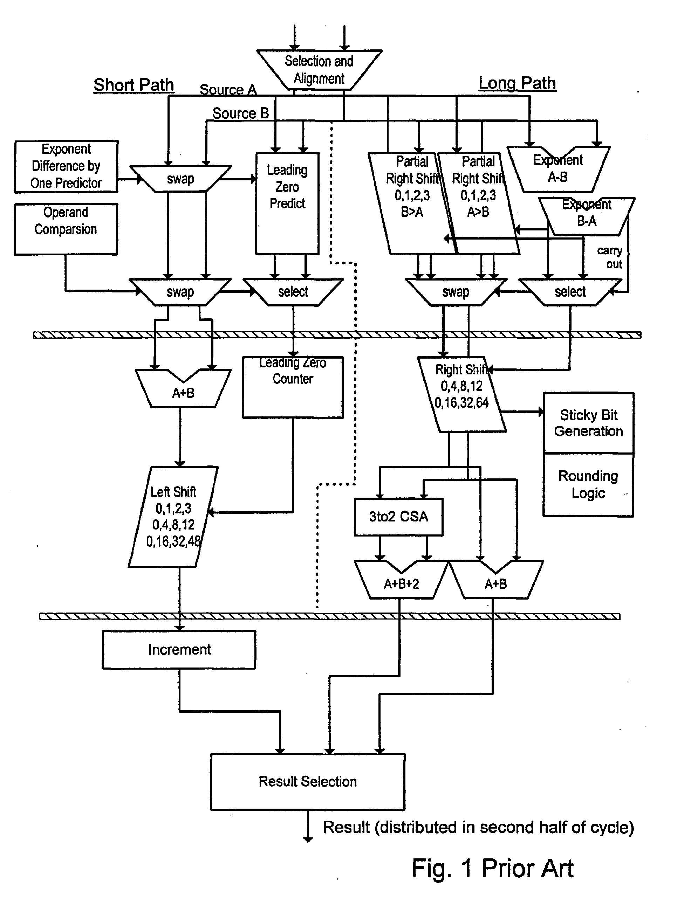

The floating-point adder unit can be improved by using dual concurrent pipeline paths. See "An improved algorithm for high speed floating-point addition," by Nhon T. Quack and Michael J. Flynn, Stanford Technical Report CSL-TR-90-442. FIG. 1 shows a conventional floating-point addition unit 100 having two concurrent pipeline paths, i. e., a short path 101 and a long path 102, configured to perform floating-point operations in parallel. The floating-point addition unit of FIG. 1 has potential speed advantages but also requires a comparatively complex hardware implementation for the dual concurrent pipeline paths.

TABLE I.

|  | Short Path | Long Path |
|---|---|---|
| Operations | Subtraction when the difference in the exponent of two operands is zero or one | Subtraction when the difference in the exponent of two operands is greater than one, or addition |

Typically, in the conventional floating point addition unit of FIG. 1, each pipeline path is arranged to require a shift of the mantissa in only one direction. Referring to FIG. 1, the short path is used for effective subtraction operations when the difference between the exponents of the two floating-point operands is 0 or 1. The long path is used for all addition operations and for subtraction operations when the exponent difference for the two floating-point operands is greater than 1. This is summarized in Table I.

In the long path, the mantissas are aligned by right shifting the smaller operand based on the exponent difference. An addition result in the long path may require rounding but no left shifting for post normalization is required because there will not be any leading zero. A subtraction result in the long path may require rounding and at most one left shift for post normalization because there will never be more than one leading zeros.

TABLE II.

| Exponent Difference | Mantissa Alignment | Normalization | Rounding of Result |
|---|---|---|---|
| 0 | Not required. | Possibly required | Not required. |
| 1 | Required | Possibly required | Possibly required |

Since the short path is used for subtract operations if the exponent difference of the two operands is zero or one, the mantissa alignment is limited to one bit, but a left-shifter for normalization after the subtraction may be required. Additionally, in the short path, some subtraction operations with exponent difference of 1 will require rounding of the final result, which is typically done with an incrementer after the normalization operation. This is summarized in Table II.

A guard bit, a round bit, and/or a sticky bit, as described in the IEEE-754 Standard, are typically used to round the result of the floating point operation. Referring now to Table II, if the exponent difference is zero, the mantissas of the two operands do not need to be aligned. If the result of the mantissa subtraction is less than 1, a normalization step is performed using a normalization left shifter. No rounding of the result is required after the normalization step because the guard bit, the round bit, and the sticky bit, as described in the IEEE-754 Standard, are empty. If the exponent difference of the two operands is one, the mantissas of the two operands need to be aligned by right shifting the mantissa of the smaller operand by one. A rounding step may also be required after mantissa subtraction because, with the right shifting, the guard bit may not be empty. If the guard bit has a value of one, a rounding operation needs to be performed to achieve an IEEE-754 compliant result.

As an illustrative example, consider two operands:

$A = 1.110000000000000000000000 * 2^0$, and

$B = 1.000000000000000000000001 * 2^{-1}$,

having an exponent difference of one and 24 bit precision. The two operands will be subtracted in the short path, which aligns the mantissas by right shifting the smaller operand, B, by one bit.

Mantissa A: 1.110000000000000000000000
Mantissa B: 0.100000000000000000000001

Subtracting B from A will result in a number requiring rounding to remain within the 24 bit precision. Here, the unrounded result of subtracting B from A is:
A-B = 1.001111111111111111111111, where the last bit is the guard bit. To be compliant with the IEEE-754 standard, a rounding step may be required for certain rounding modes if the guard bit has a value of one, so the rounded result of A- B is:
1.010000000000000000000000.

The rounding step in the short path is typically done by an incrementer. This incrementer is undesirable because it results in a delay through the short path being potentially greater than the delay through the long path. Moreover, additional hardware (e.g., logic gates) is required to implement the incrementer.

Therefore, there is a need for an improved dual concurrent pipeline floating-point adder technique.

### Summary of the Invention

The apparatus and method of the present invention operate to perform a floating-point operation involving at least two operands in floating-point representation. The apparatus comprises two concurrent data paths, a short path and a long path. The short path is used to produce a result of the floating-point operation if the floating-point operation is a subtract operation and the difference between the exponents of the two operands ("exponent difference") is 0, or if the floating-point operation is a subtract operation, the exponent difference is 1, and the mantissa of the operand with a larger exponent is within a predetermined number range. The long path is used to produce a result of the floating-point operation if the floating point operation is an addition operation, or if it is a subtraction operation and the exponent difference is larger than one, or if it is a subtract operation, the exponent difference is 1, and the mantissa of the operand with the larger exponent is within another predetermined number range. Using this logic for selecting a data path for the floating-point operation, the short path does not require means such as an incrementer for post subtraction normalization.

### Brief Description of the Drawings

Figure 1 is a block diagram of a conventional floating-point adder unit having concurrent pipeline paths.

Figure 2 is a flow chart illustrating a process for performing an addition or subtraction operation on two floating-point operands according to one embodiment of the present invention.

Figure 2A is a flow chart illustrating a selection process in the process for performing an addition or subtraction operation on two floating-point operands according to one embodiment of the present invention.

Figure 3 is a flow chart illustrating a short path process in the process for performing an addition or subtraction operation on two floating-point operands according to one embodiment of the present invention.

Figure 4 is a flow chart illustrating a long path process in the process for performing an addition or subtraction operation on two floating-point operands according to one embodiment of the present invention.

Figure 5 is a schematic block diagram of a floating-point adder unit having two concurrent data paths in accordance with the present invention.

Figure 6A is a table including criteria for selecting an addition result in a long path in the floating-point adder unit in accordance with the present invention.

Figure 6B is a table including criteria for selecting a subtraction result in the long path in the floating-point adder unit in accordance with the present invention.

### Detailed Description of the Preferred Embodiments

The following detailed description is based upon the IEEE-754 Standard and includes numerous specific details of the floating-point representation formats in the Standard, in order to provide a thorough understanding of the present invention. However, it will be understood by those skilled in the art that the present invention may be practiced outside of the IEEE-754 Standard and/or without these specific details.

The present invention includes a floating-point adder system, method, and algorithm. Some details of a preferred implementation of the present invention are described in an article "1-Ghz HAL SPARC 64 Dual Floating-point Unit With RAS Features," by Ajay Naini, Atul Dhablania, Warren James, and Debjit Das Sarma. Proceedings of the 15th IEEE Symposium on Computer Arithmetic, 11-13 June 2001. Vail, Colorado, pp. 173-183, which is incorporated by reference herein.

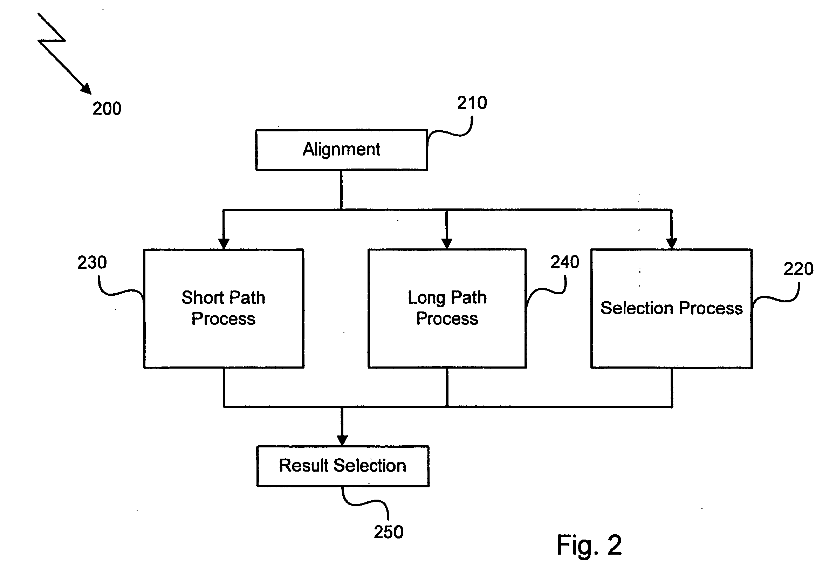

FIG. 2 is a flow chart illustrating a process 200 of the present invention for performing an addition or subtraction operation on two floating-point operands.

$$A = (-1)^{s'} m_A R^{e'} \text{ and } B = (-1)^{s''} m_B R^{e''}.$$

The process 200 comprises an alignment step 210 and three concurrent sub-processes, a short path process 230, a long path process 240, and a selection process 220. At the alignment step 210, the two operands are received and are aligned with the IEEE double-precision format. The process 200 further comprises a result selection step 250 for selecting a result from the short path process 230 or the long path process 240 based on a determination of the selection process 220.

In one embodiment of the present invention, the selection process determines whether to select a result produced by the short path process 230 or by the long path process 240 for the addition or subtraction operation based on the criteria set out in Table III. Referring to Table III, the result from the short path process 230 is selected at the result selection step 250 if:

1. the operation is a subtraction operation and the difference between the exponents of the operands A and B is 0; or

2. the operation is a subtraction operation, the difference between the exponents of the operands A and B is 1, and the mantissa of the operand with the larger exponent is less than 1.5.

TABLE III.

| Short Path | Long Path |
|---|---|
| ----- | Addition |
| Subtraction if the difference in the exponent of operands is zero. | Subtraction if the difference in the exponent of the operands is greater than one. |
| Subtraction if the exponent difference is one and the magnitude of the mantissa of the larger operand is less than 1.5 | Subtraction if the exponent difference is one and that magnitude of the mantissa of the larger operand is greater than or equal to 1.5 |

Referring again to Table III, the result from the long path process 240 is selected at the result selection step 250 if:

1. the operation is an addition operation;

2. the operation is a subtract operation and the difference between the exponents of the operands A and B is larger than 1; or

3. the operation is a subtraction operation, the difference between the exponents of the operands A and B is 1, and the mantissa of the operand with the larger exponent is larger than or equal to 1.5.

TABLE IV

| Short Path | Long Path |
|---|---|
| ----- | Addition |
| Subtraction if the difference in the exponent of operands is zero. | Subtraction if the difference in the exponent of the operands is greater than one. |
| Subtraction if the exponent difference is one and the magnitude of the mantissa of the larger operand is less than or equal to 1.5 | Subtraction if the exponent difference is one and that magnitude of the mantissa of the larger operand is greater than 1.5 |

In an alternative embodiment, the selection process determines whether to select a result from either the short path process 230 or the long path process 240 according to the criteria set out in Table IV. Referring to Table IV, the result from the short path process 230 is selected at the result selection step 250 if:

1. the operation is a subtraction operation and the difference between the exponents of the operands A and B is 0; or

2. the operation is a subtraction operation, the difference between the exponents of the operands A and B is 1, and the mantissa of the operand with the larger exponent is less than or equal to 1.5.

Referring again to Table IV, the result from the long path process 240 is selected at the result selection step 250 if:

1. the operation is an addition operation;

2. the operation is a subtract operation and the difference between the exponents of the operands A and B is larger than 1; or

3. the operation is a subtraction operation, the difference between the exponents of the operands A and B is 1, and the mantissa of the operand with the larger exponent is greater than 1.5.

FIG. 2A illustrates in more detail the selection process 220 according to one embodiment of the present invention. The selection process 220 comprises a step 221 for determining whether the floating-point operation is an addition operation or subtract operation. In response to the determination that the operation is an addition operation, the selection process 200 makes a decision to select the result from the long path process 240 and passes this decision to the result selection step 250. On the other hand, in response to the determination that the operation is a subtraction operation, the selection process 200 proceeds to determine the exponent difference for the two operands at steps 223 and 225. In response to the determination that the exponent difference is larger than 1 at step 223, the process 200 makes the decision to select the result from the long path process 240 and passes this decision to the result selection step 250. In response to the determination at step 225 that the exponent difference is 0, the process 200 makes a decision to select the result from the short path process 230 and passes this decision to the result selection step 250. In response to the determination at step 225 that the exponent difference is 1, the process 200 proceeds to determine, at step 227, whether the mantissa of the operand with the larger exponent is less than 1.5 (or not greater than 1.5 if the selection rule in Table IV is used). In response to the determination that the larger mantissa is less than 1.5 (or not greater than 1.5 if the selection rule in Table IV is used), the process 200 makes the decision to select the result from the short path process 230 and passes this decision to the result selection step 250. On the other hand, in response to the determination that the mantissa of the operand with the larger exponent is not less than 1.5 (or greater than 1.5 if the selection rule in Table IV is used), the process 200 makes the decision to select the result from the long path process 240 and passes this decision to the result selection step 250.
The selection rule as set out in Table III is simpler to execute than the selection rule as set out in Table IV. When the selection rule in Table III is used, only the two MSB bits of the mantissa of the operand with the larger exponent needs to be examined at step 227 to determine if the mantissa has a value less than 1.5 (meaning that result from the short path should be selected), or not less than 1.5 (meaning that result from the long path should be selected).

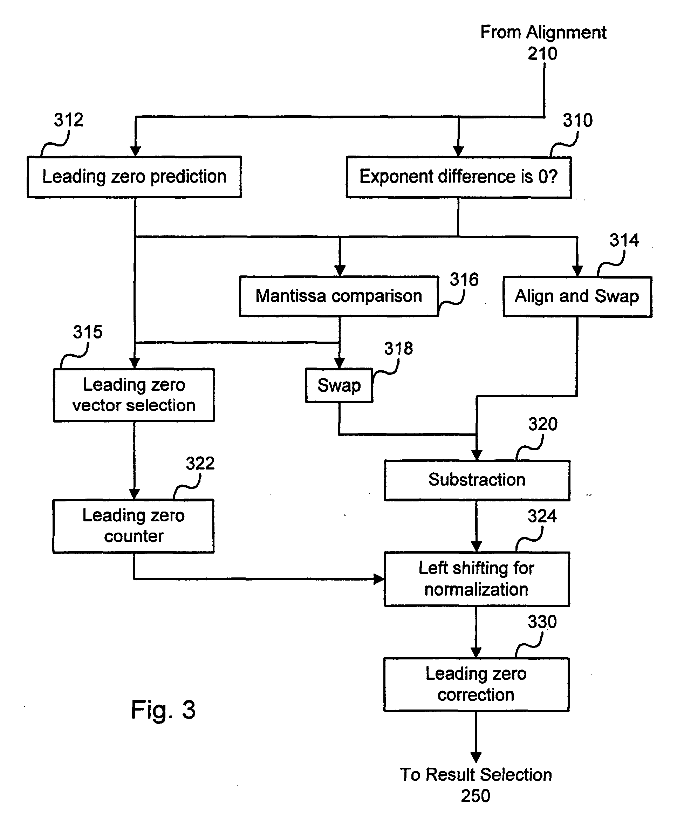

FIG. 3 is a flow chart illustrating the short path process 230 in more detail. At the beginning of the short path process 230, two sets of steps.are taken in parallel to each other, and both sets of steps is followed by a left shifting for normalization step 324. The first set of steps start with step 310 where the two least significant exponent bits of operand A is compared with the two least significant exponent bits of operand B. In response to the determination that the two least significant exponent bits of operand A is different from the two least significant exponent bits of operand B, an align and swap step 314 is taken afterwards where the operand with the smaller exponent (based on the two least significant exponent bits) is right shifted by 1 bit in order to align the mantissas of the two operands, and the two operands may be swapped so that the operand with the smaller exponent will be subtracted from the operand with the larger exponent. On the other hand, if at step 310 it is determined that the two least significant exponent hits of operand A is the same as the two least significant exponent bits of operand B, a mantissa comparison step 316 is taken to determine which mantissa is larger, followed by a swap step 318 where the operands may be swapped so that the smaller mantissa will be subtracted from the larger mantissa. Following either the align and swap step 316 or the swap step 318 is a mantissa subtraction step 320, where the mantissa of the smaller operand is subtracted from the mantissa of the larger operand.
The second set of steps comprises a leading zero prediction step 312 for predicting leading zeros in a final result of the subtract step 320, and a leading zero counting step 322 for counting and encoding the predicted leading zeros. At the leading zero prediction step 312, an algorithm is used to generate two leading zero vectors, $Z_1$ and $Z_2$. The leading zero vector $Z_1$ is generated assuming that the mantissa of A will be subtracted from the mantissa of B and the leading zero vector $Z_2$ is generated assuming that the mantissa of B will be subtracted from the mantissa of A. Thus, the second set of steps further comprises a leading zero vector selection step 315 for selecting, based on results from steps 310 and 316, where the larger operand is determined, the leading zero vector generated with the assumption that the mantissa of the smaller operand will be subtracted from the mantissa of the larger operand.

For example, if it is determined at step 310 or 316 that operand A is the larger operand, then the leading zero vector $Z_2$ is selected at the leading zero selection step 315. In one embodiment of the present invention, each of the mantissas of operands A and B has 52 bits, such that

$$m_A = (a_{51}a_{50}.....a_0), \text{ and } m_B = (b_{51}b_{50}.....b_0).$$

Assuming that $m_A$ and $m_B$ are aligned, the algorithm for generating $Z_2$ implements the twos complement subtraction by inverting B, so that

$$Z_2 = \overline{((a_i \oplus \bar{b}_i)+(\bar{a}_{i-1} \cdot b_{i-1}))}; i = 1, 2, ...63$$

where, •, +, *and* $\oplus$ denote AND, OR, and Exclusive-OR operators, respectively, and the upper line notes denote the NOT operator. The above prediction algorithm, which does not use a full carry chain, generates the prediction vector $Z_2$ that has, at most, one too few leading zeros, as compared to the number of leading zeros in the final result of the subtraction step 320. Therefore, the short path process further comprises a leading zero correction step 330 for correcting this error.

The leading zeros in the selected leading zero vector is counted and encoded at the leading zero counting step 322. In parallel, the mantissa subtraction is computed at the subtraction step 320. Because steps 312, 315, and 322 anticipate the number of leading zeros and thus the amount of left shift for normalization , and are performed in parallel with the subtraction step 320, a left shifting for normalization step 324 can be carried out immediately after the subtraction step 320 in accordance with the anticipated amount of shift. At the left shifting for normalization step 324, a result from the subtraction step 320 is left shifted according to the number of leading zeros predicted. The leading zero correction step 330 follows the left shifting for normalization step 324 to correct any error resulted from the leading zero prediction algorithm for the leading zero prediction step 312.

The short path does not require a rounding step because the result of the subtraction operation performed in the short path always has a mantissa value less than or equal to one. For example, in the case that the exponent difference has a value of one and the mantissa of the larger operand is less than 1.5, the minuend is in the range of (1, 1.5) and the one-bit shifted subtrahend is in the range of [0.5, 1) yielding a result that falls in the range of (0,1). If the result is less than one, at the left shifting for normalization step 324, the guard bit is moved to at least the least significant bit position (LSB). Therefore, no rounding in the short path is required.

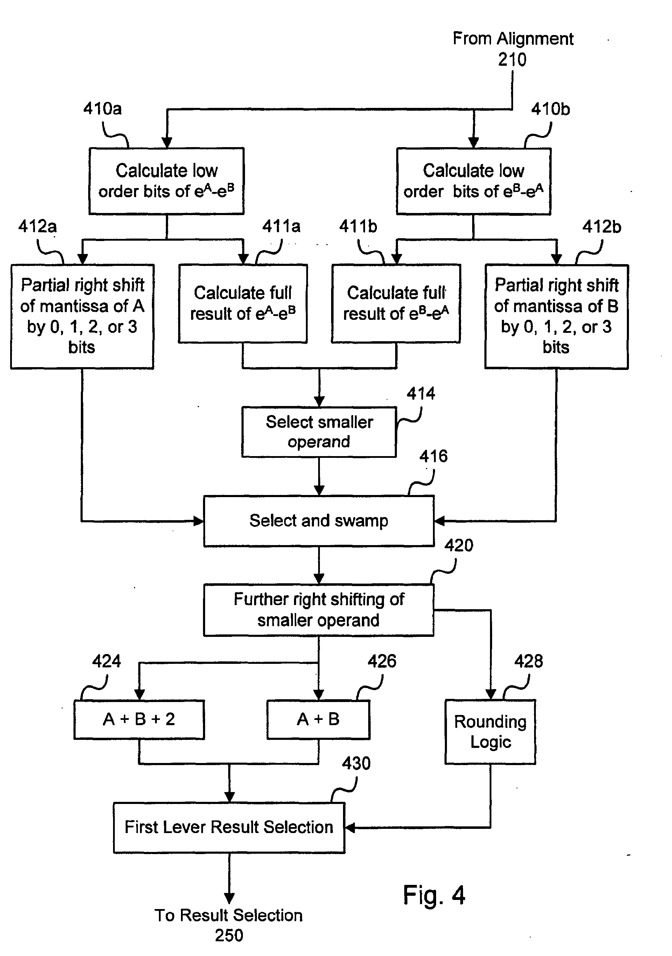

FIG. 4 is a flow chart showing the long path process 240 in more detail. Referring to FIG. 4, in response to the long path process being selected at step 210, both the lower order bits of $e^A$ - $e^B$ and the lower bits of $e^B$ - $e^A$ are calculated in parallel at steps 410a and 410b, respectively. The lower order bits of $e^A$ - $e^B$, such as the two least significant bits of $e^A$ - $e^B$, is used to partially right shift the mantissa of operand B by 0, 1, 2, or 3 bits at step 412a, while a full result of $e^A$ - $e^B$ is being calculated in parallel at step 411a. Concurrently, the lower order bits of $e^B$ - $e^A$, such as the two least significant bits of $e^B$ - $e^A$, is used to partially right shift the mantissa of operand A by 0, 1, 2, or 3 bits at step 412b, while a full result of $e^B$ - $e^A$ is being calculated in parallel at step 411b. Based on the full result of $e^A$ - $e^B$ or $e^B$ - $e^A$, a smaller operand between A and B is selected at step 414, and the partially right shifted smaller operand is selected at step 416. Also at step 416, the partially right shifted smaller operand may be swapped with the other operand so that the smaller operand is in the subtrahend position for the subtract operation. Step 416 is followed by step 420 where the smaller operand may be further right shifted according to the full result of $e^A$ - $e^B$ or $c^B$ - $e^A$, which ever is positive. As data is right shifted out of the mantissa of the smaller operand, rounding information is computed in parallel at step 428, which performs a rounding logic according to the IEEE-754 standard.

In parallel to step 428, mantissa addition or subtraction is performed at steps 424, and 426. For proper IEEE-754 rounding, the computation of A+B, A+B+1, and A+B+2 are required. This can be achieved using only two concurrent steps 424 and 426 to generate A+B and A+B+2, respectively, because A+B+1 can be derived from these two results and the derivation is done at step 430. At step 430, a first level result selection is also done to select a result among the results of A+B, A+B+1, and A+B+2 for the long path process, and the selected result is normalized and/or rounded based on the rounding information from step 428.

In the present invention, subtraction operations for an exponent difference of one and the mantissa of the larger operand having a magnitude value greater than or equal to 1.5 are performed in the long path. As previously described, in the long path the mantissa of the smaller operand is aligned by right shifting. If the exponent difference is one and the mantissa of the larger operand has a value greater than 1.5, the subtraction is limited to a minuend in the range of [1.5,2) and subtrahend in the range [0.5,1) with a result falling in the range of (0.5, 2). Therefore, no post-addition right shifting in the long path is required and the potential single bit left shift may be handled during the first stage of the result selection step 430.

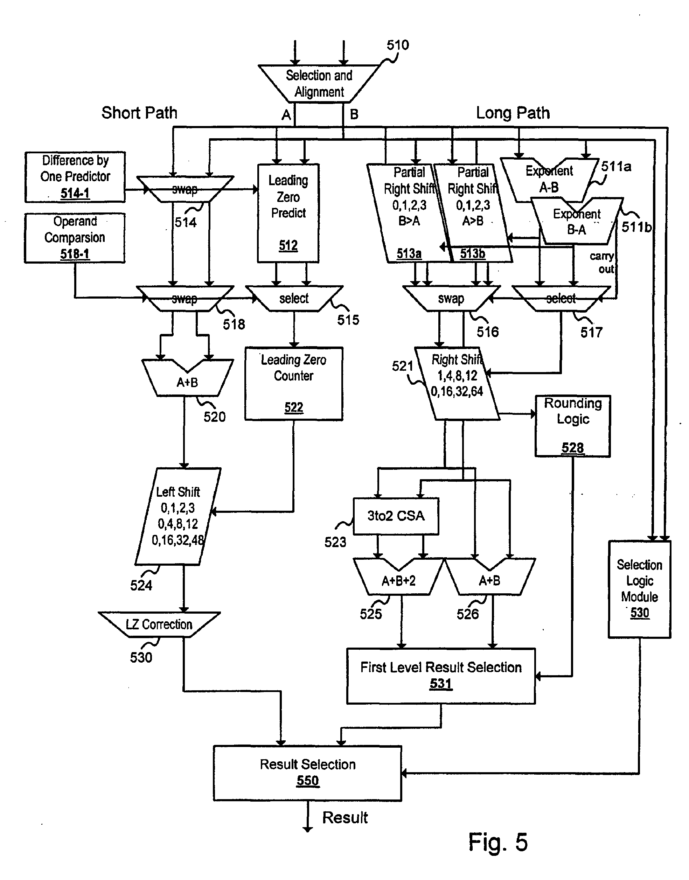

FIG. 5 is a schematic block diagram showing an overall structure of a floating-point adder unit 500 that implements the process 200 described above. Referring to FIG. 5, the floating-point adder unit 500 comprises an alignment module 510 that implements the alignment step 210 in the process 200. The alignment module 510 receives as inputs the operands A and B for addition or subtraction, and aligns the operands with the IEEE double precision format.

The floating-point adder unit 500 has two concurrent pipelined paths, a short path and a long path. In the short path, the floating-point adder unit 500 comprises an exponent difference by one predictor 514-1 coupled to the alignment module 510 for implementing step 310 of the process 200. In one embodiment of the present invention. the exponent difference by one predictor 514-1 determines whether the exponent difference for the two operands is zero by examining just the two least significant exponent bits of each operand. The floating-point adder unit 500 further comprises a first swap module 514 coupled to the alignment module 510 and to the exponent difference by one predictor 514-1. The first swap module 514 includes circuit elements that implements steps 314 in the process 200, i.e., in response to the determination by the exponent difference by one predictor 514-1 that the exponent difference for the operands A and B is not zero, the first swap module 514 aligns the mantissas of the two operands by right shifting the mantissa of the operand with the smaller exponent (determined by examining only the two least significant exponent bits of each operand) by one bit and swap the two operands if the operand with the smaller exponent happens to be at the minuend position. The floating-point adder unit 500 further comprises an operand comparison module 518-1 coupled to the alignment module 510, and a second swap module 518 coupled to the first swap module 514 and to the operand comparison module 518-1. If the exponent difference by one predictor 514-1 determines that the exponent difference for the two operands is zero, the operand comparison module 518-1 and the second swap module 518 responds by performing steps 316 and 318 in the process 200, i.e., the operand comparison module 518-1 compares the mantissas of the two operands to determine which operand is larger in value, and if the larger operand happens to be the subtrahend, the second swap module 518 swaps the operands so that the larger operand is moved to the minuend position.

Still in the short path, the floating-point adder unit 500 further comprises a leading zero predict module 512 coupled to the alignment module 510, and a select module 515 coupled to the exponent difference by one predictor 514-1 and the operand comparison module 518-1, and to the leading zero predict module 512. The leading zero predict module 512 performs step 312 of the process 200, and the select module 515 performs step 315 in the process 200. The leading zero predict module 512 includes conventional logic circuits configured to carry out the logic operations prescribed by the leading zero prediction algorithm for the leading zero prediction step 310 in the process 200, as discussed above.

Further in the short path, the floating-point adder unit 500 comprises an first adder 520 coupled to the second swap module in pipeline stage 1, a leading zero counter 522 coupled to the select module 515, and a left shifter 524 in the short path coupled to the first adder and the leading zero counter. The first adder 520 includes logic circuits configured to perform the mantissa subtraction step 320 in the process 200. The leading zero counter performs the leading zero counting step 322 in the process 200, and the left shifter 524 performs the left shifting for normalization step 324 in the process 200.

Further in the short path, the floating-point adder unit 500 comprises a leading zero correction module 530 coupled to the left shifter 524 in the pipeline stage 2. The leading zero correction module performs the leading zero correction step 330 in the process 200.

In the long path, the floating-point adder unit 500 comprises a second adder 511a and a third adder 511b, both being coupled to the selection and alignment module 510. The second adder 511a receives the operands A and B from the alignment module 510, and performs step 410a for calculating the lower order bits of $e^A - e^B$ and step 411a for calculating the rest of the bits for the full result of $e^A - e^B$ in the process 200. The third adder 51 1b receives the operands A and B from the alignment module 510, and performs step 410b for calculating the lower order bits of $e^B - e^A$ and step 41 1b for calculating the rest of the bits for the full result of $e^B - e^A$ in the process 200.

In the long path, the floating-point adder unit 500 further comprises a first right shifter 513a coupled to the alignment module 510 and to the second adder 511a, and a second right shifter 513b coupled to the selection and alignment module 510 and to the third adder 511b. The first right shifter 513a receives the operands A and B from the selection and alignment module 510, receives the lower order bits of $e^A - e^B$ from the second adder 511a, and performs step 412a for partially right shifting the mantissa of operand B by 0, 1, 2, or 3 bits based on the lower order bits of $e^A - e^B$. Similarly, the second right shifter 513a receives the operands A and B from the selection and alignment module 510, receives the lower order bits of $e^B - e^A$ from the third adder 51 1b, and performs step 412b for partially right shifting the mantissa of operand A by 0, 1, 2, or 3 bits based on the lower order bits of $e^B - e^A$.

Further in the long path, the floating-point adder unit 500 comprises an operand selection module 517 coupled to the second adder 511 a and the third adder 511 b, and a select/swap module 516 coupled to the first right shifter 513a and the second right shifter 513b, and to the operand selection module 517. The operand selection module 517 performs step 414 in the process 200, i.e., the operand selection module selects between operands A and B a smaller operand based on the results of the second adder 511 a and/or the third adder 511b. The selection is output to the select/swap module 516, which performs step 416 in the process 200 by selecting between the partially right shifted mantissas of A and B the partially right shifted mantissa of the smaller operand. In addition, if it is a subtraction operation and the smaller operand happens to be the minuend, the select/swap module 516 swaps the two operands so that the smaller operand is moved to the subtrahend position.

Further in the long path, the floating-point adder unit 500 comprises a third right shifter 521 coupled to the operand selection module 514 and to the select/swap module 516, a 3to 2 Carry Save Adder (CSA) 523 coupled to the third right sifter 521, a fourth adder 525 coupled to the 3to2 CSA 523, and a fifth adder 526 coupled to the third right shifter 521. The third right shifter 521 performs the right shifting step 420 in the process 200 and shifts the partially shifted mantissa of the smaller operand based on the higher order bits of the result of the second adder 511a or the third adder 511b. The fourth adder 525 performs step 424 for computing A+B+2 in the process 200, and the fifth adder 526 performs step 426 for computing A+B in the process 200. The 3to2 CSA is used for the generation of A+B+2 because the LSB position is different for double and single precesion.

In the long path, the floating-point adder unit 500 further comprises a rounding logic module 528 coupled to the second right shifter 520. As data is right shifted out of the mantissa of the smaller operand in the second right shifter 520, the rounding information, including the LSB+1 bit, the LSB, the guard bit, the round bit and the sticky bit, as described in the IEEE-754 standard, is computed in parallel by the rounding logic module 528.

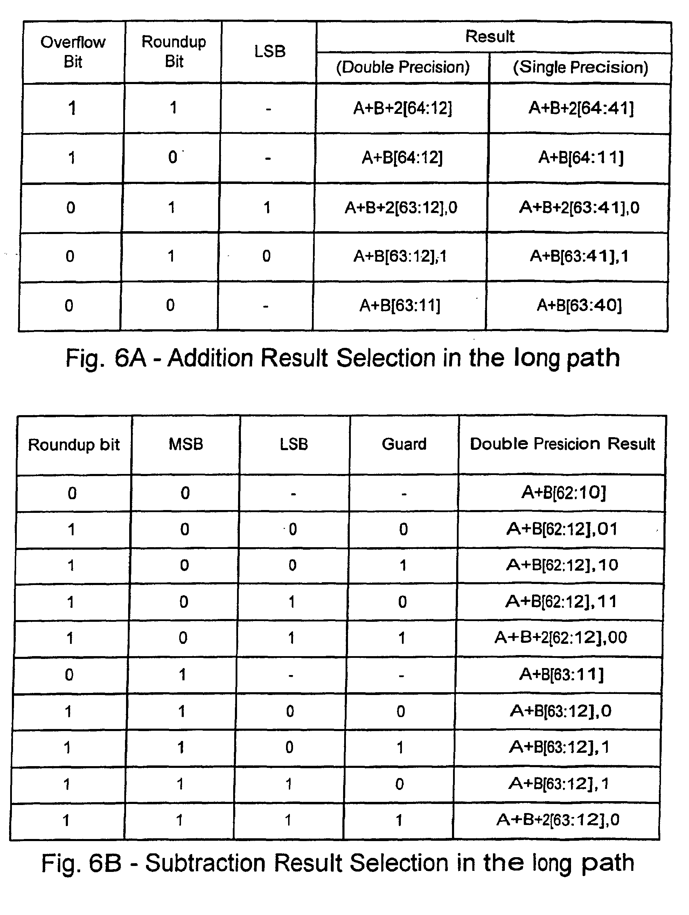

Further in the long path, the floating-point adder unit 500 comprises a first stage result selection module 531 coupled to the fourth and fifth adders 524 and 526, and to the rounding logic module 528. The first stage result selection module 531 performs the first stage result selection step 430 in the process 200. FIG 6A is a table including result selection criteria and a rounding and normalization algorithm used by the first stage result selection module 531 for addition operations. FIG 6B is a table including result selection criteria and a rounding and normalization algorithm used by the first stage result selection module 531 for subtraction operations.

As shown in FIG. 6A, rounding and normalization performed by the first stage result selection module are based on an overflow bit, which is one bit position higher than the most significant bit (MSB) of a selected result, a roundup bit, and the LSB. The roundup bit indicates a conditional increment of a pre-normalized result for performing IEEE-754 compliant rounding for all rounding modes, and is computed based on the rounding mode, sign, guard, round, sticky bits, and/or the overflow bit, according to the IEEE-754 standard.

Referring to the table of FIG. 6B, subtraction results falling in the range (0.5, 2) will require a one bit left shift for normalization when the result is less than 1. In this case, the rounding position will change from the LSB to the guard bit. These two possible rounding positions can be handled using two fill bits at the LSB+1 and LSB positions, combined with A+B and A+B+2 results. For example, when the LSB and the guard bit are both one, a round up will carry through and be reflected by the selection of A+B+2 on the upper bits, zeroing out the LSB bit(s) in the process. More details about how the fill bits are combined with A+B and A+B+2 results to generate the result for the long path are included in FIG 6B. The rounding algorithm illustrated in the tables of FIG. 6A and FIG. 6B supports all four rounding modes as described in the IEEE-754 standard.

Referring to FIG. 5, the floating-point adder unit 500 further comprises a selection logic module 540 coupled to the alignment module and including logic circuits configured to perform the selection process 220, i.e., to determine whether to select a result from the short path or the long path based on the selection criteria in Table III or IV. The floating-point adder unit 500 further comprises a result selection module 550 coupled to the left shifter 524 in the short path, the first stage result selection module 531 in the long path, and to the selection logic module 540. The result selection module 550 includes logic circuits configured to perform the result selection step 250 in the process 200, i. e., to select a result between results from the short path and the long path based a decision from the selection logic module 540.

The present invention reduces the hardware cost by eliminating the incrementer in the pipeline stage 3 in the short path of the conventional adder unit illustrated in FIG 1.

The present invention also eliminates the time delay associate with the rounding step in the short path of a conventional floating-point adder.

**Claims**

1. In a floating-point adder having a long path and a short path, a method of selecting the path for a subtraction operation involving two operands, each operand having a mantissa and an exponent, the method comprising:

   responsive to a difference between the exponents of the two operands being greater than one, selecting the long path;
   responsive to a difference between the exponents of the two operands being zero, selecting the short path;
   responsive to the difference between the exponents of the two operands being one, and the mantissa of the operand with a larger exponent being in a first predetermined number range, selecting the short path; and responsive to the difference between the exponent of the larger operand and the exponent of the smaller operand being one, and the mantissa of the larger operand being in a second predetermined number range, selecting the long path.

2. The method of claim 1, wherein the first predetermined number range consists of numbers smaller than 1.5, and the second predetermined number range consists of numbers not less than 1.5.

3. The method of claim 1, wherein the first predetermined number range consists of numbers not greater than 1.5, and the second predetermined number range consists of numbers greater than 1.5.

4. In a floating-point adder unit having two concurrent data paths, a short path and a long path, each data path producing a result for a floating-point operation involving two operands, each operand having a mantissa and an exponent, a method for selecting a result between the result produced by the short path and the result produced by the long path, comprising:

in response to the floating point operation being an addition operation, selecting the result produced by the long path;
in response to the floating point operation being a subtract operation and a difference between the exponents of the two operands being larger than 1, selecting the result produced by the long path;
in response to the floating point operation being a subtract operation and a difference between the exponents of the two operands being 0, selecting the result produced by the short path
in response to the floating point operation being a subtract operation, the difference between the exponents of the two operands being I, and the mantissa of the operand with a larger exponent being in a first predetermined number range, selecting the result produced by the short path; and
in response to the floating point operation being a subtract operation, the difference between the exponents of the two operands being 1, and the mantissa of the operand with a larger exponent being in second predetermined number range, selecting the result produced by the long path.

5. The method of claim 4, wherein the first predetermined number range consists of numbers smaller than 1.5, and the second predetermined number range consists of numbers not less than 1.5.

6. The method of claim 4, wherein the first predetermined number range consists of numbers not greater than 1.5, and the second predetermined number range consists of numbers greater than 1.5.

7. A floating-point adder unit comprising a short path and a long path, wherein the short path does not include means for rounding a subtraction result.

8. A floating-point adder unit for performing a floating-point operation on two operands, comprising:

two concurrent data paths, a short path and a long path, each data path receiving the two operands and producing a possible result for the floating point operation involving the two operands; and
a selection logic module running concurrently with each data path and including logic circuits configured to determine whether to select the possible result from the short path or the possible result from the long path as a result of the floating-point operation, using the method as set out in any of the claims 3, 4, or 5.

9. The floating-point adder unit as in claim 7, further comprising a result selection module coupled to the short path, the long path and the selection logic module, and including logic circuits configured to select between the possible result from the short path and the possible result from the long path a result of the floating-point operation based on the determination made by the selection logic module.

10. The floating-point adder unit of claim 8, wherein the short path does not include means for rounding a subtraction result.

Fig. 1 Prior Art

EP 1 282 034 A2

200

210

Alignment

230

Short Path
Process

240

Long Path
Process

220

Selection Process

Result Selection

250

Fig. 2

From Alignment
210

312

Leading zero prediction

310

Exponent difference is 0?

314

Mantissa comparison

316

Align and Swap

315

Leading zero vector selection

318

Swap

322

Leading zero counter

320

Substraction

324

Left shifting for normalization

330

Leading zero correction

Fig. 3

To Result Selection
250

From Alignment
210

410a

Calculate low
order bits of $e^A$-$e^B$

410b

Calculate low
order bits of $e^B$-$e^A$

412a

Partial right shift
of mantissa of A
by 0, 1, 2, or 3
bits

411a

Calculate full
result of $e^A$-$e^B$

411b

Calculate full
result of $e^B$-$e^A$

412b

Partial right shift
of mantissa of B
by 0, 1, 2, or 3
bits

414

Select smaller
operand

416

Select and swamp

420

Further right shifting of
smaller operand

424

A + B + 2

426

A + B

428

Rounding
Logic

430

First Lever Result Selection

To Result Selection
250

Fig. 4

## Fig. 5

| Overflow Bit | Roundup Bit | LSB | Result | |
|---|---|---|---|---|
| | | | (Double Precision) | (Single Precision) |
| 1 | 1 | - | A+B+2[64:12] | A+B+2[64:41] |
| 1 | 0 | - | A+B[64:12] | A+B[64:11] |
| 0 | 1 | 1 | A+B+2[63:12],0 | A+B+2[63:41],0 |
| 0 | 1 | 0 | A+B[63:12],1 | A+B[63:41],1 |
| 0 | 0 | - | A+B[63:11] | A+B[63:40] |

## Fig. 6A - Addition Result Selection in the long path

| Roundup bit | MSB | LSB | Guard | Double Presicion Result |
|---|---|---|---|---|
| 0 | 0 | - | - | A+B[62:10] |
| 1 | 0 | 0 | 0 | A+B[62:12],01 |
| 1 | 0 | 0 | 1 | A+B[62:12],10 |
| 1 | 0 | 1 | 0 | A+B[62:12],11 |
| 1 | 0 | 1 | 1 | A+B+2[62:12],00 |
| 0 | 1 | - | - | A+B[63:11] |
| 1 | 1 | 0 | 0 | A+B[63:12],0 |
| 1 | 1 | 0 | 1 | A+B[63:12],1 |
| 1 | 1 | 1 | 0 | A+B[63:12],1 |
| 1 | 1 | 1 | 1 | A+B+2[63:12],0 |

## Fig. 6B - Subtraction Result Selection in the long path